# EUROPEAN PATENT APPLICATION

(11) **EP 1 647 793 A2**
(43) Date of publication of application: **19.04.2006**
(21) Application number: 05022335.3
(22) Date of filing: 13.10.2005
(51) Int. Cl.: F28D 21/00, F24H 8/00

(54) **Regenerator for the condensation of the smokes**

(30) Priority: 15.10.2004 IT BO20040636
(71) Applicant: TECLAB S.C.R.L., 43058 Sorbolo PR (IT)
(72) Inventor: Rastelli, Raffaele, 43058 Sorbolo (Parma) (IT); Lovascio, Nicola, 42100 Reggio Emilia (IT)
(74) Representative: Paolini, Elena

(57) **Abstract**

It consists of a modular set of plates (9, 10) with alternated male-female coupling that form, with constant step, inside thermic exchange chambers wet to the water of the boiler circuit and outside the interspaces of the smokes crossing between the plates (9, 10). The modular set of plate is hydraulic connected through two drawing holes connected with the inside chamber (14) that coupling each other forming a collectoring for the parallel distribution of the water in inlet and in outlet of the regenerator. The female head plate (24) has a bigger thickness so to be the support of the thermic exchange plates and the support of the muffs for the hydraulic connection of the inlet and the outlet of the boiler circuit. The last plate has not the two holes for closing the two collectorings making watertight the water circuit.

## Description

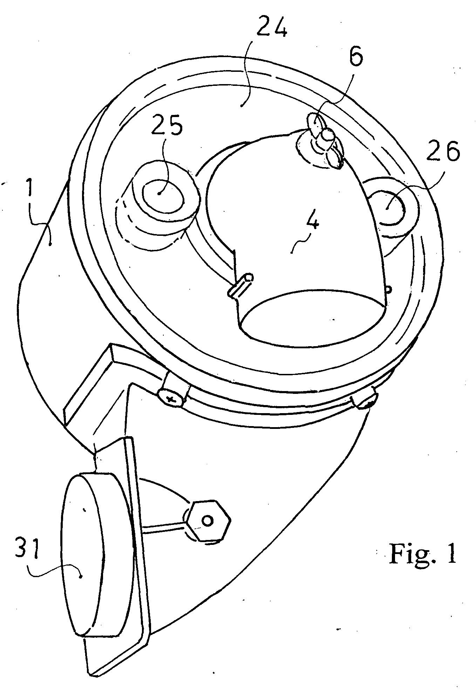

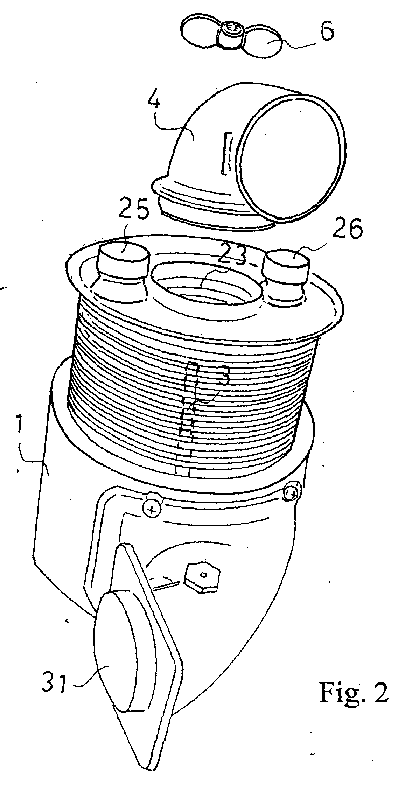

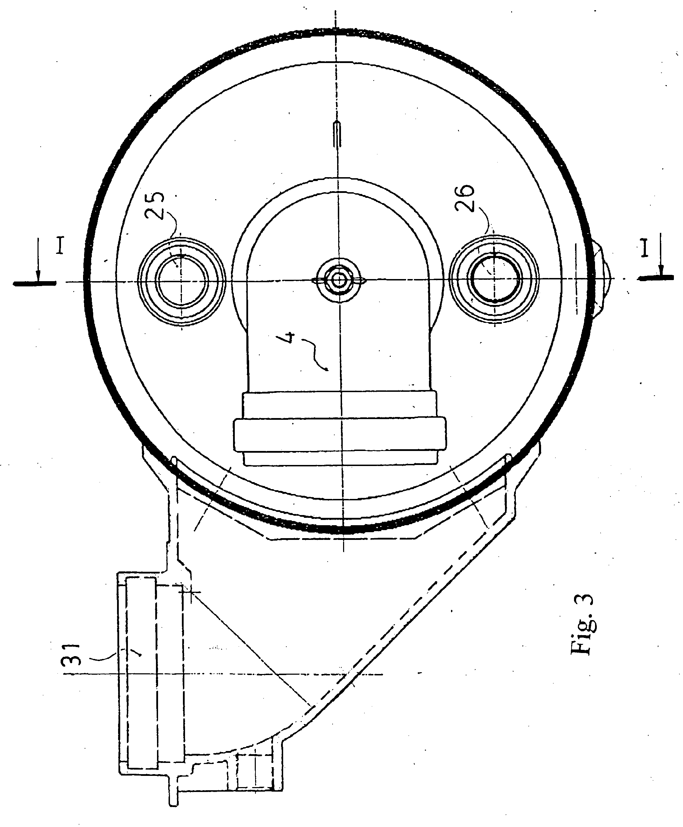

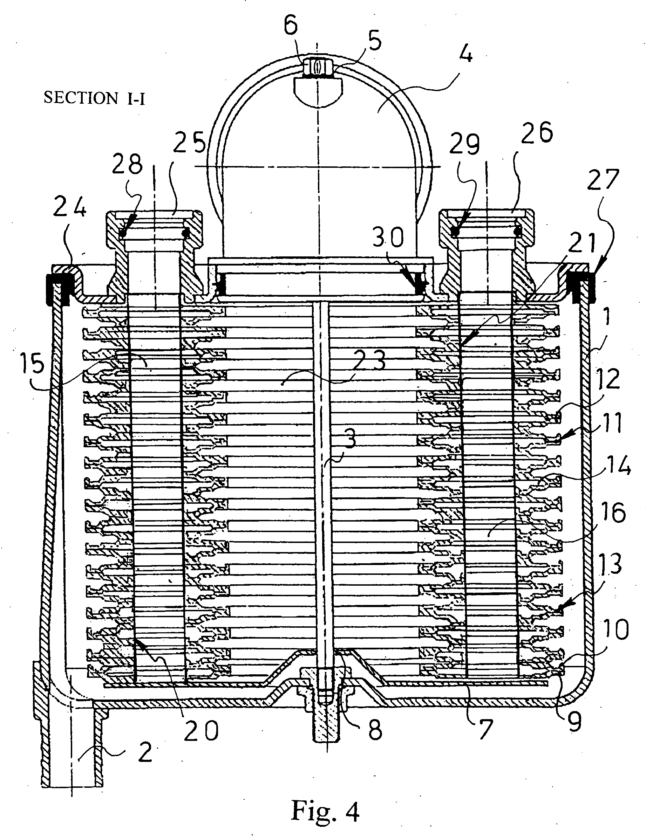

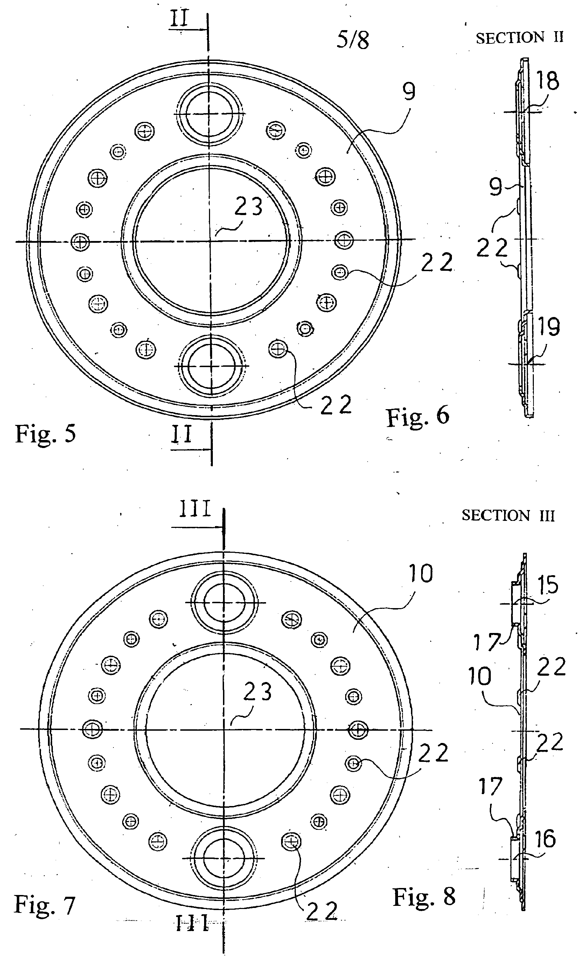

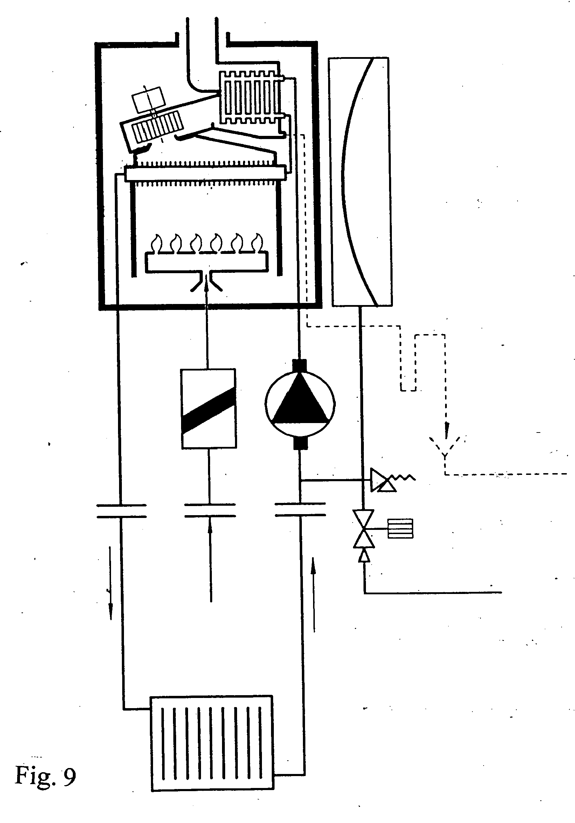

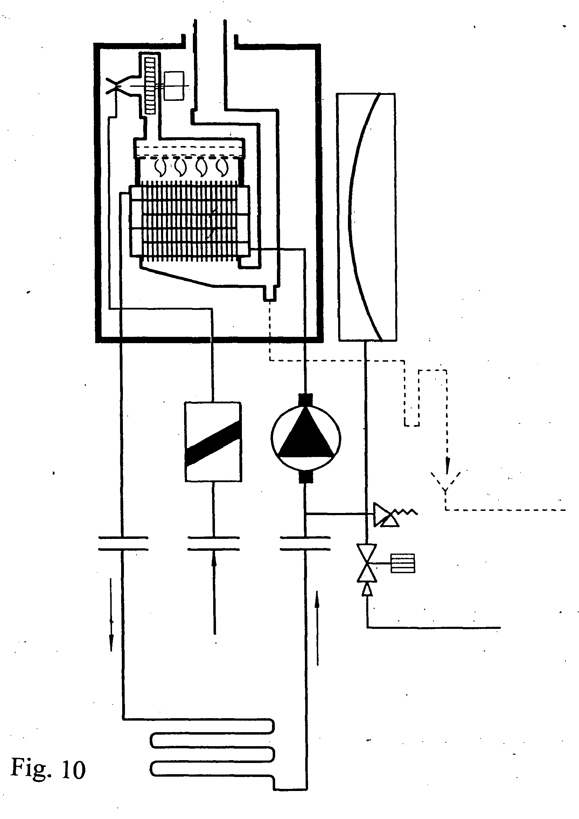

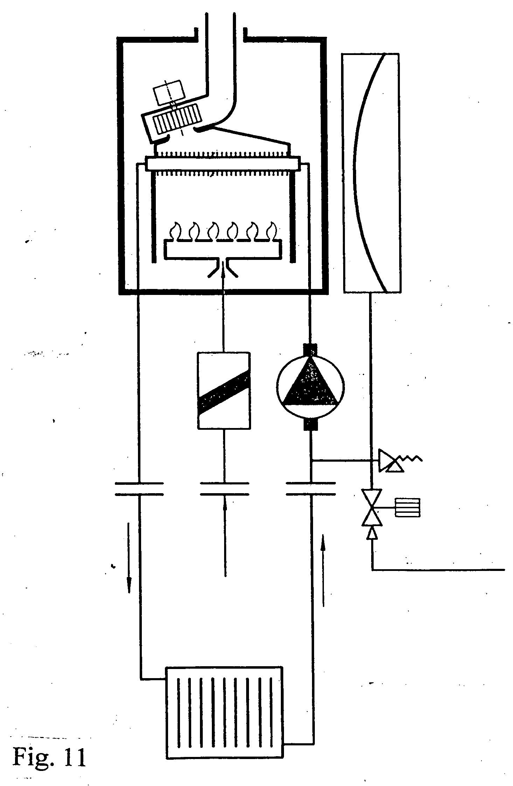

The present invention refers to a regenerator for the condensation of the smokes to be placed into household conventional gas boilers, with the aim to increase the overall efficiency of the boilers so to change them in every respect in real condensation boilers with high thermic efficiency. The current traditional boilers without smoke regenerator have an efficiency useful to the water not superior to the 83%, referring to the high heat value of the flue gas, and in the grading pertinent to the efficiency these boilers are in the low part of the grading. As is known the current traditional boilers with atmospheric gas burner with forced extraction of the smokes use only the primary share of the heat generated with the gas combustion while the secondary share, referred to the latent heat of condensation of the smokes, is dispersed through the stack without to be used for increasing the overall efficiency of the boiler. The latent heat of the smokes is generally exploited and so recuperated in the so called "condensation boilers" with the use of exchangers with big dimensions, to be wholly realized with suitable materials, such as aluminium or stainless steel, so to resist to the acid corrosion of the condensation. The heat quantity recuperated from the condensation of the smokes increases the boiler efficiency of several per cent points, in relation inversely proportional to the working temperature of the plant, with efficiencies that can reach to 93/97%, superior to the conventional boilers of 10/15 per cent points. The condensation boilers, that use these known heat exchangers, also permitting a good recovery of the latent heat of the smokes are still today considered on the market like very complex apparatuses that necessary use premix gas burners, with only primary air and with electronic control of the aria-gas connection. All that above said gives products for "the insiders", rather expensive and of difficult operating/upkeep that, at the end, meet a certain suspicion with the assemblers. To favour a quicker diffusion of the so called condensation boilers, so to have in shorter times a big energetic save, on the market intermediation solutions are proposing, i.e. traditional boilers modified adding a downstream secondary heat exchanger, considering the flow advancement of the smokes, to the primary heat exchanger for the latent heat recovery of the smokes. Said boilers so become at condensation also having the basic structural arrangements of the traditional boilers and they have a big market approval for their achieve cost and for their simplicity in the operating and/or upkeep. The difficulty in the realization of this kind of boiler is given to the use of a supplementary heat exchanger, with big dimension as exchange surface, to be placed in spaces already defined that no providing for its presence, without changing the basis components. Others problems for placing secondary head exchangers in the conventional boilers are meeting in the increase of the air-pressure drops into the water circuit and into the smoke circuit that requests the use of water circulation pumps and of smoke electro-fans of bigger power with inevitably increasing of the product costs. Aim of the present invention is to eliminate the above cited problems creating a regenerator for the condensation of the smokes inside conventional boilers, cheap, where the definite geometrical shape and very contained overall dimensions making easy its collocation in small spaces present downstream of the primary heat exchanger, without changing of the combustion circuit of the boiler and of the basic components, in the same time assuring a big increasing of the efficiency, so to equalize them to the classic condensation boilers. Other aim of the invention is to create a wide exchange surface of about 0,6 mq., all in water bath, with overall dimension very limited, without the necessity of exchange finned surfaces, known in the art like "dry", or to a collectoring pipe as provided in the prior art. Other aim of the invention is to create a regenerator with high heat exchange efficiency but with a turbulence of the fluids nearly null, so to have very low air-pressure drops regarding water or smokes and to have the same water circulating pump and the same electro-fun for the smoke outlet used in the traditional boiler. Other aim of the invention is to create a regenerator with heat exchange structure completely realized in anticorrosion aluminium (minimum to 97,5%) cold pre-molded and with braze welding at 620°C in continuous furnace like a sole block, with the use of a new sector productive technology, so to have a great overall reductions, with the same exchange surface, in comparison with the regenerator that use for the heat exchanger the finned pipe rolled up to helicoid or the collectoring pipe, as in the known art. These and other features are better explained in the following description and in the drawings, with only explicative and not limiting aim, in the enclosed sheets 1, 2, 3, 4, 5, 6, 7 and 8. In detail in sheet 1 figure 1 is perspective view of the invented regenerator. In sheet 2 figure 2 is exploded view of the same. In sheet 3 figure 3 is frontal view of the invention. In sheet 4 figure 4 is sectional view of the same. In sheet 5 figure 5 is frontal view of the female plate. Figure 6 is section view of the female plate. Figure 7 is frontal view of the male plate. Figure 8 is section view of the male plate. In sheets 6, 7 and 8 plants with boilers are illustrated so to point out the passage from the conventional boilers and from the condensation boilers to the boilers with condensation heat recovery where the invented apparatus is inserted. In particular in sheet 6 figure 9 is plant of a conventional boiler having only the primary heat exchanger with atmospheric burner. In sheet 7 figure 10 is plant of a boiler so called at condensation having a heat exchanger of big dimension for the condensation of the smokes, with premix gas burner with primary air. In sheet 8 the figure 11 is plant of a condensation boiler coming to a conventional boiler with atmospheric burner, modified, with the insertion of a regenerator for the condensation of the smokes placed downstream to the primary exchanger. The invented apparatus consists of a containing body 1, in anticorrosion aluminium (at 97,5% minimum) or in plastic material resisting to the acid corrosion of the condensation and to the temperature of the smokes, with hole and condensation exhaust pipe 2. A central stud 3 is centrally placed connecting the base of the container body 1 to the smoke inlet sleeve 4. Said central stud 3, placed in the hole onto the sleeve 4, has in the end part a washer 5 and a stop nut 6 so to keep in seat the underlying components. Inside the container body 1, on the base of the inside components, a last plate 7 is present with a surface without lateral holes but with a central hole 8 to be inserted in the central stud 3. On the upper part of said last plate 7 is put a female plate 9 to contain with insertion and welding a male plate 10. The female plate 9 has extreme rims 11 placed in annular position onto which go to pair off corresponding surfaces 12 of the male plate. In these areas is present a plating 13 with fusion temperature lower of the aluminium or of the material of which the plates 9 and 10 are made, so to realize a fusion when these plates are placed in a furnace so to steady joint them with liquid and/or gas seal. The so jointed plates form inside chambers 14 crossed to the water of the boiler circuit. Moreover, the male plates 10 have two holes 15 and 16, centrally placed to the inside chamber 14, with rims 17 protruding over the corresponding holes 18 and 19 of the female plate 9. The succession of the rims 17 into the holes of the female plates 9 form two inlet and outlet muffs 20 and 21 for the water that circulates also in the inside chambers 14. Then, the plates 9 and 10 have lug bolts 22 on both the sides of the plate having the work to space out the same plates. Said lug bolts 22 space out the plates to even step, both for the inside chambers 14 than for the space necessary to make outside lap the plates to the smokes of the boiler. The plates 9 and 10 has also a wide central hole 23 where the smokes coming to the inlet sleeve 4 flow to outside lap the same plates. Said plates 9 and 10 in pile placed, alternating male plates and female plates, are closed to a head plate 24 of the same shape and dimension of the underlying plates and also it having a central hole 23 connected with the sleeve 4. Said head plate 24 has a bigger thickness and it has two muffs 25 and 26, corresponding to the muffs 20 and 21, having the work to create the inlet and the outlet of the water coming from the boiler circuit. The head plate 24 is then connected to the containing body 1 with a radial lip seal 27.

In this way the head plate 24 is suitable to be the cover of the container body 1 blocked and kept in position by means of the stop nut 6 and of the washer 5 of the central stud 3. O-rings 28 and 29 are then present to seal liquid to the muffs 25 and 26 and a seal 30 to seal smokes is present between the sleeve 4 and the central hole 23 of the head plate 24. The smokes reaches the exhaust 31 after to have laped the plates 9 and 10. The invented regenerator is in particular characterized to a modular set of plates 9 and 10 with alternate male-female coupling that forms, with constant step, inside the thermic exchange chambers wet to the water of the boiler circuit and outside the interspaces of smokes crossing between the plates 9 and 10. The modular set of plates is hydraulic connected through two drawing holes connected with the inside chamber 14 that coupling each other forming a collectoring for the parallel distribution of the water in inlet and in outlet of the regenerator. Having shape of female plate, the head plate 24, of the same material but of bigger thickness, has the work of support the thermic exchange plates and of support of the muffs for the hydraulic connection of the inlet and the outlet of the boiler circuit. A last plate identical to the intermediate plates but without the two holes closes the two collectorings making watertight the water circuit. The containing body 1, also it in aluminium or alternatively in plastic material resistant to the acid corrosion of the condensation and to the temperature of the smokes, contains the thermic exchange plates, forming with the same a one way of the smokes for the uniform crossing of the interspaces, pre-arranged in a sole step from the lug bolts 22. Moreover the containing body 1 has the work to collect the condensation water, producing to the cooling of the smokes under the dew point, and send it, through the condensation pipe 2 placed on the container bottom, toward the outlet siphon. Main characteristic of the present invention is the upkeep facility with frontal extraction of the plates that permits to completely take out the thermic exchange plates for the periodical cleaning without making disconnect the containing body 1 connected to the other parts of the smokes circuit of the boiler.

## Claims

1. Regenerator for the condensation of the smokes **characterized in** the fact to consists of a modular set of plates (9, 10) with alternated male-female coupling that form, with constant step, inside thermic exchange chambers wet to the water of the boiler circuit and outside the interspaces of the smokes crossing between the plates (9, 10); and **in that** the modular set of plates is hydraulic connected through two drawing holes connected with the inside chamber (14) that coupling each other forming a collectoring for the parallel distribution of the water in inlet and in outlet of the regenerator; and **in that** with shape of female plate, the head plate (24) of the same material but of bigger thickness has the work of support the thermic exchange plates and of support of the muffs for the hydraulic connection of the inlet and the outlet of the boiler circuit; and **in that** the last plate identical to the intermediate ones but without the two holes closes the two collectorings making watertight the water circuit; and **in that** the containing body (1) contains the thermic exchange plates forming with the same a one way of the smokes for the uniform crossing of the interspaces, pre-arranged in a sole step from the lug bolts (22).

2. Regenerator for the condensation of the smokes, as per claim 1, **characterized in** the fact that the male and female plates (9,10) are in anticorrosion aluminium cold pre-molded and with braze welding at 620° in continuous furnace like a sole block such as the fusion of the plating (13) joints said plates realizing a liquid and/or gas seal in the contact points between the plates (9, 10).

3. Regenerator for the condensation of the smokes, as for the previous claims, **characterized in** the fact that the containing body (1) can be in plastic material resisting to the acid corrosion of the condensation and to the temperature of the smokes.

4. Regenerator for the condensation of the smokes, as for the previous claims, **characterized in** the fact to have a high heat exchange efficiency, but with a turbulence of the fluids nearly null, so to have very low air-pressure drops regarding water or smokes and to have the some water circulating pump and the same electro-fun for the smoke outlet used in the traditional boiler.

5. Regenerator for the condensation of the smokes, as for the previous claims, **characterized in** the fact to have upkeep facility and frontal extraction of the plates that permits to completely take out the thermic exchange plates for the periodical cleaning without making disconnect the containing body 1 connected to the other parts of the smokes circuit of the boiler.
